# EUROPÄISCHE PATENTSCHRIFT

(11) **EP 2 019 935 B1**
(45) Veröffentlichungstag und Bekanntmachung des Hinweises auf die Patenterteilung: **12.12.2012**
(21) Anmeldenummer: 07725304.5
(22) Anmeldetag: 16.05.2007
(51) Int. Cl.: F16D 65/097, F16D 65/092

(54) **SCHEIBENBREMSE SOWIE BELAGTRÄGER UND DRUCKPLATTE FÜR EINE SOLCHE SCHEIBENBREMSE**
DISK BRAKE AND LINING CARRIER AND PRESSURE PLATE FOR A DISK BRAKE OF SAID TYPE
FREIN À DISQUES ET PORTE-GARNITURE ET PLATEAU MOBILE POUR UN TEL FREIN À DISQUES

(30) Priorität: 22.05.2006 DE 102006023964
(43) Veröffentlichungstag der Anmeldung: 04.02.2009
(73) Patentinhaber: Wabco Radbremsen GmbH, 68229 Mannheim (DE)
(72) Erfinder: KELLER, Marcus, 69469 Weinheim (DE); RITTER, Markus, 68549 Ilvesheim (DE)
(74) Vertreter: Leinweber & Zimmermann
(86) Internationale Anmeldenummer: PCT/EP2007/004389
(87) Internationale Veröffentlichungsnummer: WO 2007/134785

(56) Entgegenhaltungen:
- EP-A2- 0 694 707
- WO-A-2007/051615

## Beschreibung

Die Erfindung betrifft eine Scheibenbremse, insbesondere für Nutzfahrzeuge, mit einer Bremsscheibe mit einer Drehachse,
einer Andruckeinrichtung, die zum Bremsen in Richtung der Drehachse gegen die Bremsscheibe gedrückt wird, und
einer Niederhalteeinrichtung, wobei
die Andruckeinrichtung einen Ansatz aufweist, der sich in eingebautem Zustand durch eine Durchgangsöffnung in der Niederhalteeinrichtung erstreckt.

Scheibenbremsen der eingangs genannten Art sind bekannt, beispielsweise aus der gattungsbitdenden EP 0 694 707 A2. Dabei ist die Niederhalteeinrichtung in Form einer als Niederhaltefeder bezeichneten Blattfeder ausgeführt. Die Niederhaltefeder ist mit radialen Ausformungen derart ausgestaltet, daß sie sich in eingebautem Zustand in beiden Drehrichtungen der Bremsscheibe an einem am Bremssattel befestigten Niederhaltebügel abstützt. Sie ist also in Umfangsrichtung ortsfest gehalten. Da sie aber mittels der länglich ausgeführten Durchgangsöffnungen in ihren seitlichen Federschenkeln die Ansätze einer in Form eines Belagträgers oder einer Druckplatte ausgeführten Andruckeinrichtung umgreift, folgt sie der Axialbewegung der Andruckeinrichtung in Richtung zur/von der Bremsscheibe. Somit verschieben sich in Axialrichtung der Bremsscheibe die Blattfeder und die Andruckeinrichtung gemeinsam.

Da jedoch die Durchgangsöffnungen in den Federschenkeln in Umfangsrichtung eine größere Länge als die Ansätze der Andruckeinrichtung aufweisen, kann zwischen der Niederhaltefeder und der Andruckeinrichtung je nach Drehrichtung der Bremsscheibe und Drehmitnahme des Bremsbelages eine seitliche (tangentiale) Relativbewegung erfolgen. Mit anderen Worten kann die Andruckeinrichtung seitliche (tangentiale) Bewegungen gegen die elastische Rückstellkraft der ortsfest gehaltenen Niederhaltefeder vollziehen, weil die länglich ausgestalteten Durchgangsöffnungen in den Federschenkeln dies zulassen. Diese freie seitliche (tangentiale) Beweglichkeit gegeneinander hat den Vorteil, daß beim Einbau zu Beginn noch keine volle Federvorspannung vorhanden ist. Die Federvorspannung steigt erst, wenn der Niederhaltebügel über die Radialansätze die Niederhaltefeder kontaktiert und sowohl die Andruckeinrichtung als auch die Niederhaltefeder beim Befestigen am Bremssattel derart niederdrückt, daß diese ihre Einbauposition einnehmen. Erst dann wirkt die volle Federvorspannung (hier radial einwärts und gewünschtenfalls auch tangential in eine bevorzugte Scheibendrehrichtung entsprechend einem Einbauversatz des Niederhaltebügels in der Scheibenbremse, bezogen auf die Mittenachse).

Grundsätzlich hat sich der oben beschriebene Aufbau bewährt. Im Fahrbetrieb und insbesondere im extremen Feldeinsatz können jedoch Situationen eintreten, die zu Beeinträchtigungen der Scheibenbremse führen.

Dies können beispielsweise radiale Schwingungen auf Schlechtwegstrecken oder Schmutz- und Korrosionsansätze sein. Insbesondere große und sich schnell wiederholende Achsbewegungen mit der daran befestigten Scheibenbremse führen zu großen Radialbewegungen der Bremsbeläge, so daß die Niederhaltefedern und insbesondere deren Federschenkel derart durch Schwingungen "ausfedern" können, daß sie von ihren Kontakt- und Haltebereichen an der Andruckeinrichtung abheben. In einem solchen Falle ist die für die Federfunktion wichtige Ausgangslage (Ruhelage) nicht mehr gewährleistet. Der Ansatz erstreckt sich nämlich dann unter Umständen nicht mehr in die Durchgangsöffnung hinein.

Eine der oben beschriebenen Scheibenbremse ähnliche Scheibenbremse ist aus der WO 92/00465 bekannt. Dabei steht der Ansatz in einem Zwischenzustand, d.h. wenn die Niederhalteeinrichtung zwar auf die Andruckeinrichtung aufgesetzt, damit aber noch nicht verspannt ist, in Umfangsrichtung der Bremsscheibe über eine Begrenzung der Durchgangsöffnung über.

Der Erfindung liegt die Aufgabe zugrunde, die Scheibenbremse der eingangs genannten Art derart weiterzubilden, daß sich der Ansatz auch unter Extrembedingungen zuverlässig durch die Durchgangsöffnung hindurch erstreckt. Dabei soll bevorzugt eine eventuelle Verschieblichkeit der Andruckeinrichtung bezüglich der Niederhalteeinrichtung in Tangentialrichtung der Bremsscheibe erhalten bleiben. Bevorzugt sollen die beiden Einrichtungen aber gemeinsam in Axialrichtung der Bremsscheibe beweglich sein.

Erfindungsgemäß wird die gestellte Aufgabe durch die Merkmale des Anspruchs 1 gelöst.

Mit anderen Worten hintergreift der Ansatz die Niederhalteeinrichtung in eingebautem Zustand, so daß die Niederhalteeinrichtung sich nicht über ein vorgegebenes Maß in Radialrichtung der Bremsscheibe bezüglich der Andruckeinrichtung bewegen kann. Vielmehr schlägt sie an dem über ihre Axialbegrenzung überstehenden Teil des Ansatzes an. Damit ist eine Ausfederbegrenzung realisiert.

Bei der Niederhalteeinrichtung handelt es sich erfindungsgemäß um eine Blattfeder.

Der Ansatz kann erfindungsgemäß nur bremsscheibenzugewandt oder nur bremsscheibenabgewandt in Axialrichtung der Bremsscheibe über eine Begrenzung der Durchgangsöffnung überstehen. Erfindungsgemäß bevorzugt ist aber vorgesehen, daß er sowohl bremsscheibenzugewandt als auch bremsscheibenabgewandt in Axialrichtung der Bremsscheibe über eine Begrenzung der Durchgangsöffnung übersteht.

Dadurch wird eine besonders verläßliche Sicherung gegen ein "Ausfedern" erreicht.

Der Ansatz kann in der Draufsicht auf sein freies Ende gegenüber der Durchgangsöffnung verdreht sein.

Mit anderen Worten wird nach dieser Ausgestaltung das Überstehen des Ansatzes durch ein Verwinden erreicht, wohingegen der Ansatz in unverwundenem Zustand nicht überstünde.

Nach einer besonders bevorzugten Ausführungsform der Erfindung ist vorgesehen, daß das freie Ende des Ansatzes bezüglich des sich in eingebautem Zustand durch die Durchgangsöffnung hindurch erstreckenden Abschnitts des Ansatzes angestellt ist.

Diese Ausgestaltung ist besonders einfach herzustellen.

Dabei beträgt der Anstellwinkel bevorzugt 5° bis 40°, weiter bevorzugt 5° bis 20°.

Der Ansatz ist erfindungsgemäß bevorzugt zumindest abschnittweise gestaucht, gebördelt, abgebogen und/oder verwunden, um den Überstand auszubilden.

Diese Ausgestaltungen bieten sich insbesondere dann an, wenn die Andruckeinrichtung aus einem verformbaren Werkstoff, wie etwa Stahl, ist.

Der Überstand kann auch angegossen sein.

Diese Ausgestaltung ist eher bei Andruckeinrichtungen aus einem Gußwerkstoff angezeigt.

Nach einer besonders bevorzugten Ausführungsform der Erfindung entspricht eine der Niederhalteeinrichtung in eingebautem Zustand zugewandte Fläche des Ansatzes der betreffenden Fläche der Niederhalteeinrichtung.

Diese Ausgestaltung beugt einem Verkanten oder Verklemmen im Falle von Relativbewegungen vor.

Häufig weist die Andruckeinrichtung zwei oder mehr Ansätze auf, die sich in eingebautem Zustand durch eine oder jeweils eine Durchgangsöffnung hindurch erstrecken. Im Falle von zwei Ansätzen ist es erfindungsgemäß bevorzugt, daß der eine auf der einen und der andere auf der anderen Seite in Axialrichtung der Bremsscheibe über eine Begrenzung einer Durchgangsöffnung übersteht. Dadurch ist die Montage erheblich erleichtert, weil die Andruckeinrichtung, insbesondere wenn sie als Blattfeder ausgeführt ist, durch Verdrillen in einfacher Weise aufgesetzt werden kann. In gleicher Weise ist die Demontage vereinfacht. Darüber hinaus wirken die beiden Ansätze wechselseitig als Kippsicherung.

Diese Ausgestaltung vereinfacht das Anbringen der Niederhalteeinrichtung an der Andruckeinrichtung.

Wie bereits oben angedeutet, handelt es sich bei der Andruckeinrichtung erfindungsgemäß beispielsweise um einen Belagträger.

Es kann sich aber auch um eine Druckplatte handeln.

Bevorzugt sind die Andruckeinrichtung und die Niederhalteeinrichtung in eingebautem Zustand in Tangentialrichtung der Bremsscheibe gegeneinander verschieblich. Dies kann beispielsweise dadurch gewährleistet sein, daß die Durchgangsöffnung in ihrer Längserstreckung länger als der Ansatz in seiner entsprechenden Erstreckung ist. Dabei kann sich die Verschieblichkeit nur auf einen mittleren und/oder einen der beiden Endbereiche der Niederhalteeinrichtung beziehen. Sie kann sich aber auch auf die ganze Niederhalteeinrichtung beziehen. Allerdings ist es erfindungsgemäß nicht ausgeschlossen, daß einer oder beide Endabschnitte der Niederhalteeinrichtung zumindest in Umfangs- bzw. Tangentialrichtung der Bremsscheibe an der Andruckeinrichtung festgelegt ist, wie dies beispielsweise bei den Bremsen nach der EP 248 385 B1, DE 100 26 547 C2 und DE 103 28 194 B3 der Fall ist.

Neben der oben im einzelnen beschriebenen Scheibenbremse bezieht sich die Erfindung nicht nur auf die Scheibenbremse als Ganzes oder auf Baugruppen der Scheibenbremse, sondern vielmehr auch auf einen Belagträger und eine Druckplatte für eine solche Scheibenbremse einzeln.

Im folgenden ist die Erfindung anhand bevorzugter Ausführungsbeispiele unter Bezugnahme auf die beiliegende Zeichnung mit weiteren Einzelheiten näher erläutert.

Dabei zeigen
- Figur 1: eine Ansicht eines Belagträgers nach einem Ausführungsbeispiel der Erfindung,
- Figur 2: die gleiche Ansicht wie Figur 1, jedoch von einem anderen Ausführungsbeispiel der Erfindung,
- Figur 3: eine schematische Draufsicht auf eine Scheibenbremse nach einem Ausführungsbeispiel der Erfindung,
- Figur 4: eine Seitenansicht der Scheibenbremse nach Figur 3,
- Figur 5: eine schematische Draufsicht auf einen Teil einer Scheibenbremse nach einem weiteren Ausführungsbeispiel der Erfindung,
- Figuren 6 bis 8: schematische geschnittene Teilansichten von verschiedenen Ausführungsbeispielen der Erfindung und
- Figur 9: Schnittansichten entlang der Linie IX-IX in Figur 6, von verschiedenen Ausführungsbeispielen der Erfindung.

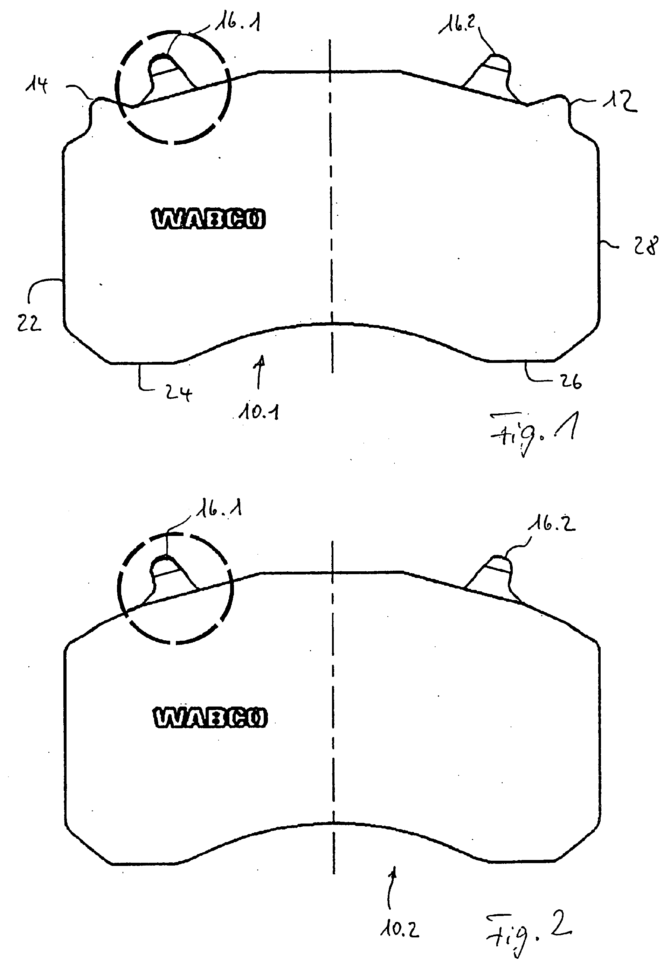

Die Figuren 1 und 2 zeigen jeweils einen Belagträger 10.1, 10.2. Sie unterscheiden sich dadurch, daß der Belagträger 10.1 nach Figur 1 Ansätze 12, 14 zum Abstützen von freien Enden einer weiter unten noch im einzelnen erläuterten Niederhaltefeder aufweist. Derartige Ansätze sind bei dem Belagträger 10.2 nach Figur 2 nicht vorgesehen. Hier liegen die freien Enden der Niederhaltefeder direkt auf dem Belagträger 10.2 auf.

Beide Belagträger 10.1 und 10.2 weisen aber Ansätze 16.1, 16.2 auf, die die Erfindung verwirklichen. Die Belagträger 10.1 und 10.2 sind an Anlageflächen 22, 24, 26, 28 in einem Bremsenträger oder einem Bremssattel verschieblich gehalten und geführt. Es sei angemerkt, daß sowohl die Ausführung der Anlageflächen 22, 24, 26, 28 als auch deren Führung/Abstützung in der Bremse und/oder im Bremsenträger auch andersartig sein können, weil dies vom Bremsentyp abhängt.

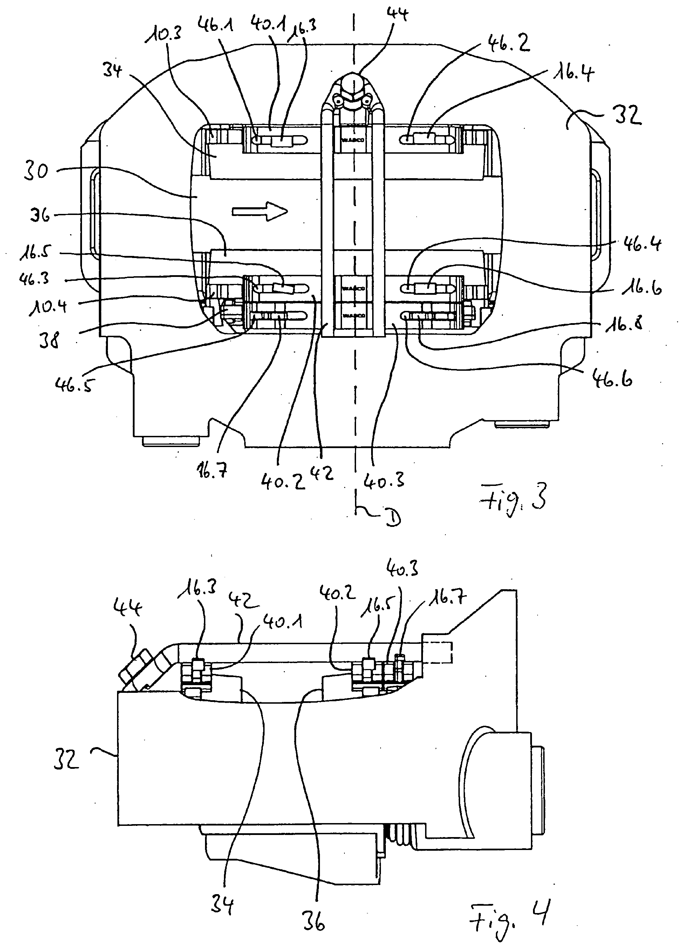

Zu der in Figur 3 in Draufsicht gezeigten Scheibenbremse gehört eine Bremsscheibe 30, ein Bremssattel 32, ein Belagträger 10.3 mit einem Reibbelag 34, ein Belagträger 10.4 mit einem Reibbelag 36 und eine Druckplatte 38. Die Belagträger 10.3 und 10.4 sowie die Druckplatte 38 werden jeweils von einer Niederhaltefeder 40.1, 40.2 bzw. 40.3 in Radialrichtung der Bremse gedrängt. Dazu dient ein Niederhaltebügel 42, der mittels beispielsweise einer Schraube 44 am Sattel 32 befestigt ist. Eine Drehachse der Bremsscheibe 30 ist mit "D" bezeichnet.

Die Niederhaltefedern 40.1, 40.2 und 40.3 weisen Durchgangsöffnungen 46.1 bis 46.6 auf, die länglich ausgestaltet sind. Sie erstrecken sich jeweils quer zu der Drehachse D. Durch die genannten Durchgangsöffnungen hindurch erstrecken sich Ansätze 16.3 bis 16.8, die an den Belagträgern 10.3 und 10.4 bzw. der Druckplatte 38 ausgebildet sind.

Wie Figur 3 zu entnehmen ist, steht der Ansatz 16.3 in Richtung der Drehachse D in Figur 3 nach unten, also bremsscheibenzugewandt über die Durchgangsöffnung 46.1 über. Der Ansatz 16.4 steht bremsscheibenabgewandt über die Durchgangsöffnung 46.2 über. Der Ansatz 16.5 ist gegenüber der Ausrichtung der Durchgangsöffnung 46.3 verwunden, weshalb er sowohl bremsscheibenzugewandt als auch bremsscheibenabgewandt über die Durchgangsöffnung 46.3 übersteht. Der Ansatz 16.6 steht wegen seiner Abmessungen sowohl bremsscheibenzugewandt als auch bremsscheibenabgewandt über die Durchgangsöffnung 46.4 über.

Wenngleich dies Figur 3 nicht im einzelnen zu entnehmen ist, so ist auch vorgesehen, daß die Ansätze 16.7 und 16.8 in Richtung der Drehachse D über die Durchgangsöffnungen 46.5 bzw. 46.6 überstehen. In diesem Zusammenhang wird auf die Darstellung nach Figur 4 verwiesen.

Es wird ausdrücklich darauf hingewiesen, daß die Art und Weise, wie die Ansätze 16.3 bis 16.8 über die jeweiligen Durchgangsöffnungen 46.1 bis 46.6 überstehen, in den Figuren 3 und 4 nur beispielhaft dargestellt ist. So müssen sie nicht alle unterschiedlich sein. Vielmehr können sie alle gleich oder in Gruppen voneinander unterschiedlich ausgeführt sein.

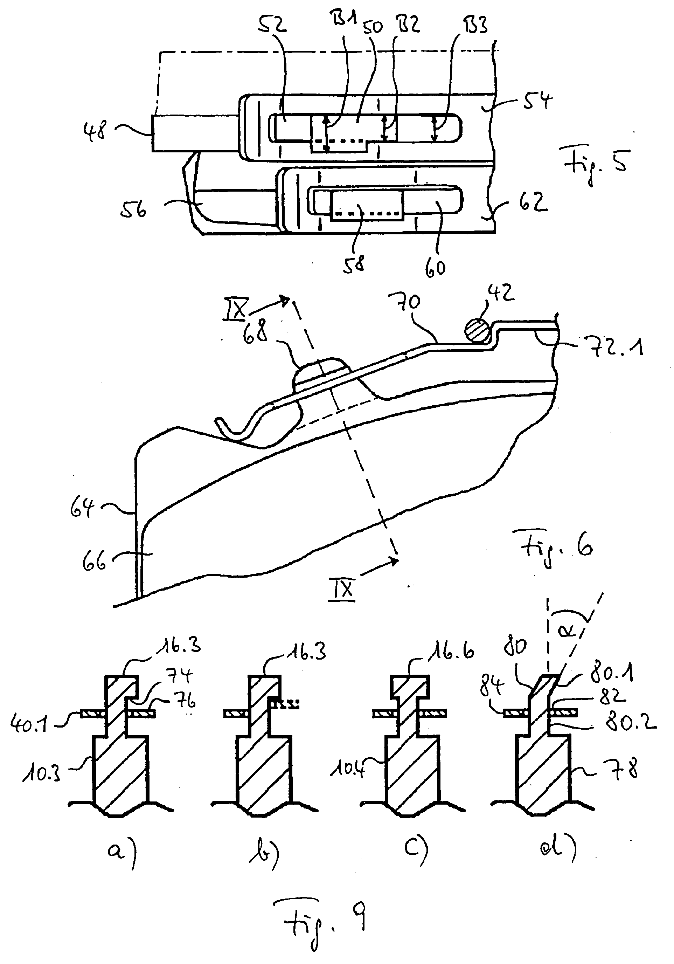

Figur 5 zeigt noch einmal schematisch verschiedene Ausgestaltungen der Erfindung So ist beispielsweise an einem Belagträger 48 ein Ansatz 50 ausgebildet, der nur in einem Teilbereich eine Breite B1 hat, die größer als eine Breite B3 einer Durchgangsöffnung 52 einer Niederhaltefeder 54 ist, wohingegen er in einem anderen Teilbereich eine der Breite B3 entsprechende Breite B2 hat. Anders sind die Verhältnisse bei einer in Figur 5 dargestellten Druckplatte 56. Deren Ansatz 58 hat annähernd durchgängig eine größere Breite als eine Durchgangsöffnung 60 einer Niederhaltefeder 62. Der Ansatz 58 kann aber auch wie der Ansatz 50 ausgestaltet sein.

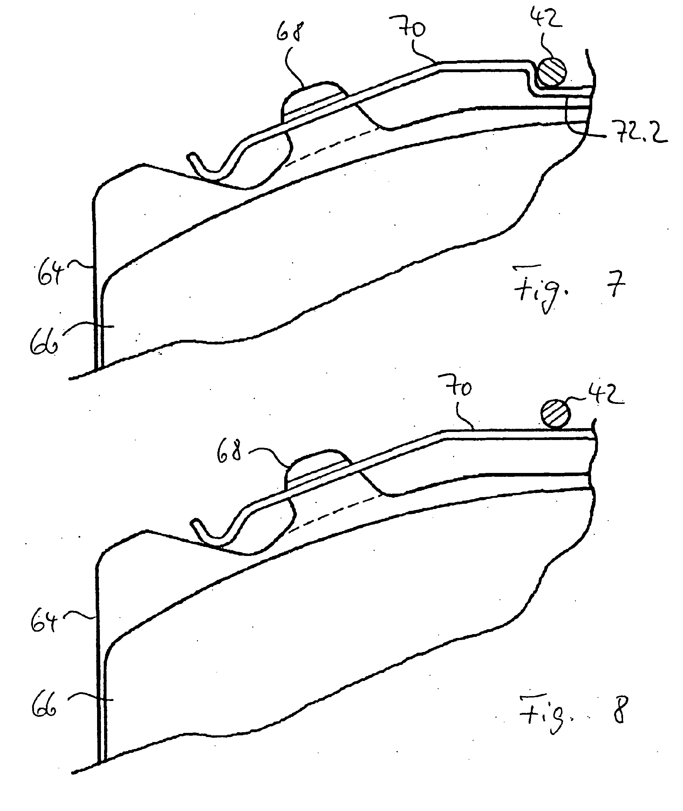

Die Figuren 6 bis 8 zeigen jeweils einen Belagträger 64 mit einem Reibbelag 66 und einer von einem Ansatz 68 hintergriffenen Niederhaltefeder 70. Dabei ist nach den Figuren 6 und 7 jeweils ein Radialansatz 72.1 bzw. 72.2 vorgesehen, durch den die Niederhaltefeder 70 in Umfangsrichtung der Bremsscheibe 30 (Figur 3) von dem Niederhaltebügel 42 ortsfest gehalten wird. Je nach Einbaulage bezüglich der Drehachse kann damit eine Radial- und/oder Tangentialrichtung der Vorspannung vorgegeben werden. Ein solcher Radialansatz ist bei der Ausgestaltung nach Figur 8 nicht vorgesehen. Daher werden hier nur Vorspannungen in Radialrichtung erzeugt.

Die Figuren 9a) und b) zeigen schematische Schnittansichten durch den Belagträgers 10.3 mit zugehöriger Niederhaltefeder 40.1. Wie insbesondere der Figur 9b) zu entnehmen ist, besteht die Möglichkeit einer Relativbewegung des Belagträgers 10.3 bezüglich der Niederhaltefeder 40.1. Diese Relativbewegung wird aber dadurch begrenzt, daß der Ansatz 16.3 in Axialrichtung der Bremsscheibe 30 (Figur 3) über die Durchgangsöffnung 46.1 übersteht. Eine Maximalauslenkung ist in Figur 9b) rechts dargestellt.

Wie insbesondere Figur 9a) zu entnehmen ist, sind eine Anschlagfläche 74 an dem Ansatz 16.3 und eine Anschlagfläche 76 an der Niederhaltefeder 40.1 übereinstimmend eben ausgestaltet, so daß auch in dem in Figur 9b) rechts dargestellten Betriebszustand eine Relativverschiebung der Niederhaltefeder 40.1 bezüglich des Belagträgers 10.3 in Umfangsrichtung der Bremsscheibe 30 ohne Verkanten oder Verklemmen erfolgen kann. Eine solche Relativverschiebung ist möglich, weil die Durchgangsöffnung 46.1 länger als der Ansatz 16.3 ist.

Figur 9c) zeigt den Belagträger 10.4 mit dem Ansatz 16.6.

Die Figur 9d) zeigt einen Belagträger 78 mit einem Ansatz 80. Das freie Ende 80.1 des Ansatzes 80 ist gegenüber dem sich durch eine Durchgangsöffnung 82 der Niederhaltefeder 84 erstreckenden Abschnitt 80.2 angestellt. In dem dargestellten Ausführungsbeispiel beträgt der Anstellwinkel α etwa 29°. Allerdings hat sich ein Anstellwinkel von 10° bewährt, weshalb dieser Wert bevorzugt wird. Das Anstellen bewirkt, daß der Ansatz 80 über die Niederhaltefeder 84 übersteht.

Die Tatsache, daß ein Ansatz an einem Belagträger oder einer Druckplatte die Niederhaltefeder quasi hintergreift, verhindert ein übermäßiges Abheben der Niederhaltefeder. Diese Wirkung besteht von Beginn der Kopplung an und verhindert, insbesondere in eingebautem Zustand, effektiv ein "Ausfedern" eines Federschenkels der Niederhaltefeder und ein Lösen vom Kontaktbereich unter Extrembedingungen. Die überstehende Anlagefläche bietet zudem noch den Vorteil, daß zwar eine gemeinsame Axialbewegung (Niederhaltefeder mit Belagträger/Druckplatte) vollzogen werden kann, in Umfangsrichtung (Tangentialrichtung) der Bremsscheibe aber Relativbewegungen möglich sind. Mit anderen Worten gehen der Belagträger und/oder die Druckplatte in dieser Richtung keinen Form- oder Kraftschluß mit dem Federschenkel ein. Die Länge der Durchgangsöffnung in den Federschenkeln ist nämlich größer als die entsprechende Erstreckung des zugehörigen Ansatzes an dem Belagträger/der Druckplatte. Der überstehende Anlagebereich bietet darüber hinaus mit seiner dem zugehörigen Federschenkel zugewandten Seite einen "Gleitbereich".

Durch den überstehenden Bereich des Ansatzes ergibt sich noch ein weiterer funktioneller Vorteil in Form einer Kippverhinderung für die Niederhaltefeder bezüglich des Belagträgers. Dies gilt insbesondere in dem Fall, daß starke Verschmutzungen eine gemeinsame Axialverschiebung bezüglich des Niederhaltebügels beeinträchtigen sollten. In diesem Fall kann sich nämlich der Federschenkel an dem Anlagebereich abstützen.

Generell ist es gleichgültig und für die Funktion der Anlagefläche unerheblich, ob die Niederhaltefeder mittig die oben erwähnten Radialansätze zur ortsfesten seitlichen Halterung durch den Niederhaltebügel aufweist und ob der Niederhaltebügel mit oder ohne Versatz gegenüber der Bremsenachse am Bremssattel für die Vorgabe einer Richtung einer Federvorspannung angeordnet ist. Ebenso ist es unerheblich, ob und gegebenenfalls wo Enden der Federschenkel am Belagträger/an der Druckplatte an- oder aufliegen. Ferner ist es unerheblich, ob die Niederhaltefeder symmetrische oder unsymmetrische Federschenkel bezogen auf die Schenkellänge aufweist.

Bei allen Ausgestaltungen des Mittenbereichs der Niederhaltefeder zwischen den beiden seitlichen Federschenkeln und Längen der Federschenkel ist die Wirkung des überstehenden Ansatzes gegeben. Mit anderen Worten verhindert der überstehende Bereich des Ansatzes wirkungsvoll ein Lösen, ein Überspringen oder ein Kippen mit anschließendem Verlust von Belagträger oder von der Druckplatte, sofern einer oder beide Federschenkel extrem ausfedern sollte/sollten.

Die erfindungsgemäße Funktion in eingebautem Zustand ergibt sich bereits aus den obigen Darlegungen. Das Aufsetzen der Niederhaltefeder auf den mit erfindungsgemäßen Ansätzen ausgestatteten Belagträger bzw. die Druckplatte erfolgt in einfacher Weise, indem die Feder je nach Ausgestaltung des Ansatzes in Schräg-/Kippstellung aufgedrückt wird. Ihre endgültige Position nimmt die Feder dann ein, wenn sie mittels des Niederhaltebügels angedrückt wird. Dies bestimmt auch die Größe sowie die Richtung einer eventuellen Vorspannkraft. Dabei befindet sich dann der Bremsbelag mit dem Belagträger in Führungen/Abstützungen des Bremssattels und/oder des Bremsenträgers.

Die in der obigen Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Scheibenbremse, insbesondere für Nutzfahrzeuge, mit
einer Bremsscheibe (30) mit einer Drehachse (D),
einer Andruckeinrichtung (10, 38), die zum Bremsen parallell zur Drehachse (D) in Richtung der Bremsscheibe (30) gedrückt wird, und
einer Niederhalteeinrichtung (40, 70) in Form einer Blattfeder, wobei
die Andruckeinrichtung (10, 38) einen Ansatz (16) aufweist, der sich in eingebautem Zustand durch eine Durchgangsöffnung (46) in einem seitlichen Federschenkel der Blattfeder (40, 70) erstreckt,
der Ansatz (16) in eingebautem Zustand in Axialrichtung der Bremsscheibe (30) über eine Begrenzung der Durchgangsöffnung (46) übersteht und
durch das Überstehen des Ansatzes (16) eine Ausfederbegrenzung für einen oder beide seitlichen Federschenkel der Blattfeder (40, 70) gebildet ist.

2. Scheibenbremse nach einem der vorangehenden Ansprüche, **dadurch gekennzeichnet, daß** die Niederhalteeinrichtung (40, 70) in Umfangsrichtung der Bremsscheibe (30) ortsfest gehalten ist.

3. Scheibenbremse nach Anspruch 1 oder 2, **dadurch gekennzeichnet, daß** die Niederhalteeinrichtung (40, 70) einen Radialansatz (72.1, 72.2) aufweist, durch den sie in Umfangsrichtung der Bremsscheibe (30) von einem Niederhaltebügel (42) ortsfest gehalten ist.

4. Scheibenbremse nach einem der vorangehenden Ansprüche, **dadurch gekennzeichnet, daß** der Ansatz (16) in eingebautem Zustand sowohl bremsscheibenzugewandt als auch bremsscheibenabgewandt in Axialrichtung der Bremsscheibe (30) über eine Begrenzung der Durchgangsöffnung (46) übersteht.

5. Scheibenbremse nach einem der vorangehenden Ansprüche, **dadurch gekennzeichnet, daß** der Ansatz (16) in der Draufsicht auf sein freies Ende gegenüber der Durchgangsöffnung (46) verwunden ist.

6. Scheibenbremse nach einem der vorangehenden Ansprüche, **dadurch gekennzeichnet, daß** das freie Ende (80.1) des Ansatzes (80) bezüglich des sich in eingebautem Zustand durch die Durchgangsöffnung (82) erstreckenden Abschnitts (80.2) des Ansatzes (80) angestellt ist.

7. Scheibenbremse nach Anspruch 6, **dadurch gekennzeichnet, daß** der Anstellwinkel 5° bis 40°, bevorzugt 5° bis 20° beträgt.

8. Scheibenbremse nach einem der vorangehenden Ansprüche, **dadurch gekennzeichnet, daß** der Ansatz (16) zumindest abschnittweise gestaucht, gebördelt, abgebogen und/oder verwunden ist, um den Überstand auszubilden.

9. Scheibenbremse nach einem der vorangehenden Ansprüche, **dadurch gekennzeichnet, daß** der Überstand angegossen ist.

10. Scheibenbremse nach einem der vorangehenden Ansprüche, **dadurch gekennzeichnet, daß** eine der Niederhalteeinrichtung (40, 70) in eingebautem Zustand zugewandte Fläche (74) des Ansatzes (16.3) der betreffenden Fläche (76) der Niederhalteeinrichtung (46.1) entspricht.

11. Scheibenbremse nach einem der vorangehenden Ansprüche, **dadurch gekennzeichnet, daß** bei zwei Ansätzen (16.3, 16.4) der eine (16.3) auf der einen und der andere (16.4) auf der anderen Seite in Axialrichtung der Bremsscheibe (30) über eine Begrenzung einer Durchgangsöffnung (46.1, 46.2) übersteht.

12. Scheibenbremse nach einem der vorangehenden Ansprüche, **dadurch gekennzeichnet, daß** die Andruckeinrichtung (10, 38) und die Niederhalteeinrichtung (40, 70) in eingebautem Zustand in Tangentialrichtung der Bremsscheibe (30) gegeneinander verschieblich sind.

13. Scheibenbremse nach einem der vorangehenden Ansprüche, **dadurch gekennzeichnet, daß** die Andruckeinrichtung ein Belagträger (10) ist.

14. Scheibenbremse nach einem der Ansprüche 1 bis 12, **dadurch gekennzeichnet, daß** die Andruckeinrichtung eine Druckplatte (38) ist.

15. Belagträger für eine Scheibenbremse nach Anspruch 13, dadurch gekenntzeichnet, daß er zwei Ansatze (16) aufweist, die sich in eingebautem Zustand durch eine jeweilige Durchgangsöffnung (46) in seitlichen Federschenkeln der als Niederhalteeinrichtung (40, 70) der Bremse dienenden Blattfeder erstrecken, wobei
die Ansatze (16) in eingebautem Zustand in Axialrichtung der Bremsscheibe (30) der Bremse über eine Begrenzung der Durchgangsöffnung (46) überstehen
durch das Überstehen eine Ausfederbegrenzung für die beiden seitlichen Federschenkel der Blattfeder (40, 70) gebildet ist.

16. Druckplatte für eine Scheibenbremse nach Anspruch 14, **dadurch gekennzeichnet, daß** sie zwei Ansatze (6) aufweist, die sich in eingebautem Zustand durch eine jeweilige Durchgangsöffnung (46) in seitlichen Federschenken der als Niederhalteeinrichtung (40, 70) der Bremse dienenden Blattfeder erstrecken, wobei
die Ansatze (16) in eingebautem Zustand in Axialrichtung der Bremsscheibe (30) der Bremse über eine Begrenzung der Durchgangsöffnung (46) überstehen und
durch das Überstehen eine Ausfederbegrenzung für die beiden seitlichen Federschenkel der Blattfeder (40, 70) gebildet ist.

## Claims

1. A disc brake, in particular for utility vehicles, comprising
a brake disc (30) with an axis of rotation (D),
a pressing device (10, 38) which, for braking, is pressed parallel to the axis of rotation (D) in the direction of the brake disc (30), and
a holding down device (40, 70) in the form of a leaf spring,
the pressing device (10, 38) having a projection (16) which, in the installed state, extends through a passage opening (46) in a side spring leg of the leaf spring (40, 70),
the projection (16), in the installed state, projecting beyond a delimitation of the passage opening (46) in the axial direction of the brake disc (30), and
a rebound delimitation for one or both side spring legs of the leaf spring (40, 70) being formed by the protrusion of the projection (16).

2. The disc brake according to any of the preceding claims, **characterised in that** the holding down device (40, 70) is kept stationary in the circumferential direction of the brake disc (30).

3. The disc brake according to Claim 1 or 2, **characterised in that** the holding down device (40, 70) has a radial projection (72.1, 72.2) by means of which it is kept stationary in the circumferential direction of the brake disc (30) by a holding down clip (42).

4. The disc brake according to any of the preceding claims, **characterised in that** the projection (16), in the installed state, projects beyond a delimitation of the passage opening (46) in the axial direction of the brake disc (30) both facing the brake disc and facing away from the brake disc.

5. The disc brake according to any of the preceding claims, **characterised in that** the projection (16) is twisted in the top view of its free end with respect to the passage opening (46).

6. The disc brake according to any of the preceding claims, **characterised in that** the free end (80.1) of the projection (80) is set at an angle with respect to the section (80.2) of the projection (80) which, in the installed state, extends through the passage opening (82).

7. The disc brake according to Claim 6, **characterised in that** the setting angle is 5° to 40°, preferably 5° to 20°.

8. The disc brake according to any of the preceding claims, **characterised in that** the projection (16) is compressed, flanged, bent and/or twisted, at least in sections, in order to form the projecting end.

9. The disc brake according to any of the preceding claims, **characterised in that** the projecting end is cast on.

10. The disc brake according to any of the preceding claims, **characterised in that** a surface (74) of the projection (16.3) facing the holding down device (40, 70) in the installed stated corresponds to the respective surface (76) of the holding down device (46.1).

11. The disc brake according to any of the preceding claims, **characterised in that** with two projections (16.3, 16.4), one projection (16.3) projects beyond a delimitation of a passage opening (46.1, 46.2) on one side in the axial direction of the brake disc (30), and the other projection (16.4) respectively projects on the other side.

12. The disc brake according to any of the preceding claims, **characterised in that** the pressing device (10, 38) and the holding down device (40, 70) are moveable with respect to one another, in the installed state, in the tangential direction of the brake disc (30).

13. The disc brake according to any of the preceding claims, **characterised in that** the pressing device is a lining carrier (10).

14. The disc brake according to any of Claims 1 to 12, **characterised in that** the pressing device is a pressure plate (38).

15. A lining carrier for a disc brake according to Claim 13, **characterised in that** it has two projections (16) which, in the installed state, extend through a respective passage opening (46) in side spring legs of the leaf spring serving as a holding down device (40, 70) of the brake,
the projections (16), in the installed state, projecting over a delimitation of the passage opening (46) in the axial direction of the brake disc (30) of the brake, and
a rebound delimitation for the two side spring legs of the leaf spring (40, 70) being formed by the projection.

16. A pressure plate for a disc brake according to Claim 14, **characterised in that** it has two projections (16) which, in the installed state, extend through a respective passage opening (46) in side spring legs of the leaf spring serving as a holding down device (40, 70) of the brake,
the projections (16), in the installed state, projecting over a delimitation of the passage opening (46) in the axial direction of the brake disc (30) of the brake, and
a rebound delimitation for the two side spring legs of the leaf spring (40, 70) being formed by the projection.

## Revendications

1. Frein à disque, notamment pour véhicules utilitaires, comportant
un disque de frein (30) présentant un axe de rotation (D),
un dispositif d'appui (10, 38) qui, pour freiner, est pressé parallèlement à l'axe de rotation (D) dans la direction du disque de frein (30), et
un dispositif de retenue (40, 70) sous la forme d'un ressort à lame, dans lequel le dispositif d'appui (10, 38) présente un épaulement (16) qui se prolonge, à l'état monté, par une ouverture traversante (46) pratiquée dans une branche latérale du ressort à lame (40, 70), l'épaulement (16), à l'état monté, déborde de l'ouverture traversante (46), dans la direction axiale du disque de frein (30), et
le débordement de l'épaulement (16) permet de constituer une limitation de détente pour l'une ou les deux branches du ressort à lame (40, 70).

2. Frein à disque selon la revendication 1, **caractérisé en ce que** le dispositif de retenue (40, 70) est maintenu de manière fixe dans la direction circonférentielle du disque de frein (30).

3. Frein à disque selon la revendication 1 ou 2, **caractérisé en ce que** le dispositif de retenue (40, 70) présente un épaulement radial (72.1, 72.2) grâce auquel il est maintenu de manière fixe dans la direction circonférentielle du disque de frein (30) sous l'effet d'un étrier de retenue (42).

4. Frein à disque selon l'une des revendications précédentes, **caractérisé en ce que** l'épaulement (16) déborde, à l'état monté, de l'ouverture traversante (46), en étant aussi bien orienté vers le disque de frein qu'en étant détourné du disque de frein, dans la direction axiale du disque de frein (30).

5. Frein à disque selon l'une des revendications précédentes, **caractérisé en ce que** l'épaulement (16), en vue de dessus, est tordu sur son extrémité libre, par rapport à l'ouverture traversante (46).

6. Frein à disque selon l'une des revendications précédentes, **caractérisé en ce que** l'extrémité libre (80.1) de l'épaulement (80) est inclinée par rapport à la section (80.2) de l'épaulement (80) qui se prolonge, à l'état monté, par l'ouverture traversante (82).

7. Frein à disque selon la revendication 6, **caractérisé en ce que** l'angle d'inclinaison va de 5° à 40°, de préférence de 5° à 20°.

8. Frein à disque selon l'une des revendications précédentes, **caractérisé en ce que** l'épaulement (16) est, au moins par sections, refoulé, rabattu, recourbé et/ou tordu afin de créer le débordement.

9. Frein à disque selon l'une des revendications précédentes, **caractérisé en ce que** le débordement est formé par coulage.

10. Frein à disque selon l'une des revendications précédentes, **caractérisé en ce qu'**une surface (74) de l'épaulement (16.3) tournée vers le dispositif de retenue (40, 70) à l'état monté correspond à la surface concernée (76) du dispositif de retenue (46.1).

11. Frein à disque selon l'une des revendications précédentes, **caractérisé en ce que**, pour deux épaulements (16.3, 16.4), un épaulement (16.3) déborde d'un côté et l'autre épaulement (16.4) de l'autre côté, dans la direction axiale du disque de frein (30), par rapport à une ouverture traversante (46.1, 46.2).

12. Frein à disque selon l'une des revendications précédentes, **caractérisé en ce que** le dispositif d'appui (10, 38) et le dispositif de retenue (40, 70) sont déplaçables l'un vers l'autre, à l'état monté, dans la direction tangentielle du disque de frein (30).

13. Frein à disque selon l'une des revendications précédentes, **caractérisé en ce que** le dispositif d'appui est une porte-garniture (10).

14. Frein à disque selon l'une des revendications 1 à 12, **caractérisé en ce que** le dispositif d'appui est un plateau mobile (38).

15. Porte-garniture pour un frein à disque selon la revendication 13, **caractérisé en ce qu'**il présente deux épaulements (16) qui, à l'état monté, se prolongent par une ouverture traversante (46) respective pratiquée dans les branches du ressort à lame servant de dispositif de retenue (40, 70) du frein,
les épaulements (16) débordant de l'ouverture traversante (46), à l'état monté, dans la direction axiale du disque (30) du frein, et
le dépassement permettant de constituer une limitation de détente pour les deux branches latérales du ressort à lame (40, 70).

16. Plateau mobile pour un frein à disque selon la revendication 14, **caractérisé en ce qu'**il présente deux épaulements (16) qui, à l'état monté, se prolongent par une ouverture traversante (46) respective pratiquée dans les branches du ressort à lame servant de dispositif de retenue (40, 70) du frein,
les épaulements (16) débordant de l'ouverture traversante (46), à l'état monté, dans la direction axiale du disque (30) du frein, et
le dépassement permettant de constituer une limitation de détente pour les deux branches latérales du ressort à lame (40, 70).
